# EUROPEAN PATENT SPECIFICATION

(11) **EP 0 894 211 B1**
(45) Date of publication and mention of the grant of the patent: **16.10.2002**
(21) Application number: 97915604.9
(22) Date of filing: 04.04.1997
(51) Int. Cl.: F16H 37/08, F16H 47/04, F16H 61/06

(54) **CVT CONTROL SYSTEM**
STEUERSYSTEM FÜR EIN STUFENLOSES GETRIEBE
SYSTEME DE COMMANDE D'UNE TRANSMISSION VARIABLE EN CONTINU

(30) Priority: 19.04.1996 GB 9608147
(43) Date of publication of application: 03.02.1999
(73) Proprietor: TOROTRAK (DEVELOPMENT) LIMITED, Leyland, Lancashire PR5 3QW (GB)
(72) Inventor: GREENWOOD, Christopher, John, Preston, Lancashire PR5 3WS (GB)
(74) Representative: W.P. Thompson & Co.
(86) International application number: GB9700956
(87) International publication number: WO97040296

(56) References cited:
- EP-A- 0 479 737
- WO-A-90/05860
- US-A- 3 406 597
- US-A- 4 997 412

## Description

The present invention relates to continuously-variable-ratio transmissions (CVTs) e.g. for use in an engine-driven vehicle, and to hydraulic control systems for such CVTs.

Transmissions are known which use a variator of the toroidal-race rolling-traction type to give the continuously-variable-ratio performance and clutches to move the transmission between one or other of two operating regimes.

Typically, such clutches are designed with interleaving friction plates actuated by hydraulic pistons. To avoid excessive drag when disengaged, the plates are positively separated by 'push off springs incorporated in the clutch.

When the low regime clutch is engaged, e.g. for neutral, reverse and low forward speeds of the vehicle, the drive from the variator to the transmission output shaft is via a mixing epicyclic gear set in which the planet carrier is driven by the input shaft, the variator output disc drives the sun, and the epicyclic annulus is connected with the transmission output shaft.

With the rollers set at their highest speed ratio positions, the influence of the sun wheel dominates to drive the transmission output shaft in reverse. As the rollers move away from this position, they pass through a "geared neutral" setting in which the equal and opposite effects of the sun and the planet carrier cancel one another out to give a zero drive effect. Thereafter, as the rollers move to operate the variator at a progressively lower speed ratio, the forward drive from the planet carrier dominates to an increasing extent. Thus when the variator ratio reaches its lower limit (i.e. minimum reverse effect), the sun, planet carrier and annulus all rotate in unison. This results in the two components of the high regime clutch also rotating at the same speeds as one another and the transmission is said to be operating at synchronous ratio.

It will readily be understood that when this latter condition has been established, the low regime clutch can disengage at the same time as (or after) the high regime clutch engages to effect a regime change with minimal slip, shock or wear.

In high regime operation, the transmission output shaft is driven via a fixed ratio chain from the variator output disc and movement of the variator rollers back towards their highest speed ratio positions will enable the transmission to achieve increasingly higher forward speed ratios right up to deep overdrive.

It will be clear that in these known systems, a synchronous change of regime can only occur at one specific transmission ratio since it is only at this point that the oncoming clutch has no relative motion across its elements and can be engaged without substantial risk of shift shock. This is true whether the change is from low regime to high regime as above discussed, or in the contrary sense. However, as in practice the clutches take a finite time to fill and engage, the fill process must be started correspondingly early if the CVT is to provide a smooth continuously varying transmission ratio.

The strategy currently adopted for this purpose in these systems engages the clutch in two phases.

In the first phase, low pressure fluid is used as the transmission approaches synchronous ratio to 'soft-fill' the clutch to a pressure just capable of overcoming the 'push off springs and closing the friction plates. The finite oil flow required for this purpose is accessed from the lubrication flow at a point downstream of the system control valves to provide a high volume low pressure flow of fluid to the clutch-actuating pistons. Since the low pressure applied to the clutch is not sufficient to create significant clutch capacity, soft fill can be started at any convenient time provided only that the clutch is full as the transmission reaches synchronous ratio.

In the second phase, once the transmission ratio is within acceptable tolerance of synchronous ratio and the clutch has been soft-filled as above described, the hydraulic supply is switched to 'hard fill' the clutch at a sufficiently higher pressure to fully engage the clutch and move the transmission into high regime operation. This second phase of the process requires very little oil flow and so is rapid with minimum disruption to pressure control.

As already stated above, if the sequence has been judged correctly, a perfect regime shift will result, as it will if the clutch fill process has been completed early because the system can then wait for synchronism. However if the fill is late, as sometimes occurs, then the transmission will have already passed synchronous ratio before any action can be taken thereby creating an almost impossible situation for satisfactory regime change. In these latter circumstances, hard-filling of the clutch will occur at a significant transmission ratio error and this results in a noticeable mechanical shock on the change from one transmission regime to the other.

An hydraulic control circuit for a CVT and including the features in the precharacterising portion of claim 1 is well-known in the art.

It is an object of the present invention to reduce and possibly eliminate the problems associates with the above-mentioned arrangement.

Accordingly, the present invention provides a multi-regime continuously variable-transmission in accordance with the features of claim 1.

Conveniently, each clutch includes an actively engaged phase obtained by connecting the clutch to a trailing pressure within the circuit and a full engaged phase obtained by connecting the clutch to a leading pressure within the circuit.

In operation, each clutch is operably connected to and, at least initially, controlled by the lower of the two pressures employed to control the variator.

Preferably, each clutch is operably connected to the higher of the two pressures employed to control the variator subsequent to it having been connected to the lower pressure employed therein.

The transmission further includes supply means for causing the supply of hydraulic fluid to each clutch to vary between the two pressures within the circuit control.

Advantageously, the transmission further includes sequencing means for causing operation and completion of the actively controlled phase prior to the commencement of the fully engaged phase.

Preferably, the transmission further includes electronic control means for initiating clutch operation in advance of a range change.

In a particularly advantageous arrangement the transmission further includes monitoring means for monitoring at least one property associated with variator operation thereby to determine in advance of the variator reaching synchronous ratio that a change in ratio is necessary and for signalling the electronic control means accordingly.

Preferably, said monitoring means includes one or more monitors for monitoring one or more of: engine speed; variator ratio; time; transmission ratio; clutch fill time and shift rate or rate of change of one or other thereof.

Preferably, the variator is of the toroidal-race rolling-traction type having ratio-varying rollers and the first and second hydraulic supply lines control the position of the variator rollers.

Preferably, each ratio-varying roller is associated with a respective hydraulic ram which is actuated by the pressures in the first and second supply lines.

In addition to the above, the present invention also provides a method of operating a control system for a multi-regime continually-variable transmission having first and second regime change clutches, the method comprising the steps of:
firstly, during regime change, initiating engagement of the otherwise unengaged clutch before the variator reaches synchronous ratio such that the engine load created by the transmission varies and thereby induces a change of regime;
secondly, completing regime change by disengaging the clutch associated with the regime from which the transmission has been changed and completing engagement of the clutch under engagement.

Preferably, the clutches comprise hydraulically operated clutches and each clutch comprises an actively engaged phase and a fully engaged phase and in which during the active phase the clutch is operably connected to a trailing pressure in a control circuit and during the fully engaged phase the clutch is operably connected to a leading pressure in the control circuit, and the method includes the further step of initiating clutch engagement by firstly connecting the clutch to the trailing pressure and completing engagement by connecting it to the leading pressure.

In a preferred mode the variator includes ratio varying rollers each associated with a respective hydraulic ram the method including the further step of supplying hydraulic fluid to the hydraulic ram such that the rollers respond to the differential pressure.

Advantageously, the method includes the further step of monitoring one or more parameters associated with the control system, transmission, or items associated therewith, thereby to determine when to commence said first and second steps.

Embodiments of the invention will now be described, by way of example only, with reference to the accompanying schematic drawings in which:
Figure 1 shows a schematic circuit diagram for a hydraulic control system in accordance with the present invention;
Figure 2 shows, in outline form only, the CVT to be controlled by the system of Figure 1;
Figure 3 is a schematic representation of a drive system incorporating aspects of the present invention; and
Figure 4 is a simplified version of the control system illustrated in the bottom half of figure 1.

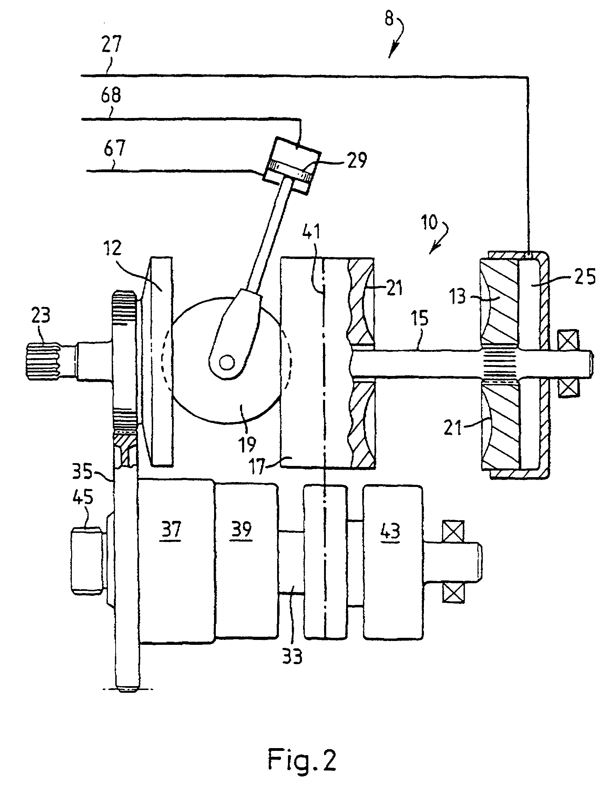

Referring first to Figure 2, the CVT 8 shown there includes a variator 10 of the toroidal-race rolling-traction type comprising two input discs 12,13 (the latter splined to the variator shaft 15 for limited axial movement along the shaft), a central output disc 17, and two arrays of piston-controlled rollers engaging with the input and output discs to transmit torque between the discs in response to the torque demand on the variator. For simplicity, only one of the six rollers, the so-called master roller 19, is shown in Figure 2.

As is known from GB 2227287, for example, it is important that the roller pistons be aligned so that they are substantially tangential to the centre circle of the imaginary toruses 21 of which the rotor races form part, but with a small inclination known as the "camber" or "caster" angle.

The variator input shaft 15 is powered at one end 23 from the engine (not shown) of the host vehicle while an axial load is imposed on the input disc at the other end of the variator by a pressure chamber 25 filled with high pressure hydraulic fluid from the same line 27. The pressure in line 27 is equal to the greater of the two pressures in lines 67, 68, the higher of which is employed as the control pressure or leading pressure fluid for roller piston 24. The trailing pressure fluid for piston 29 is provided from whichever of lines 67, 68 has the lower pressure. It will therefore be noted that the roller responds to the differential pressure across its control piston rather than to the absolute pressure values in lines 67 and 68.

For high regime operation, e.g. as described in the introductory portions of this application, the transmission output shaft 33 is powered from the variator input shaft via gearing 35, a low regime clutch 37 and an epicyclic gear set 39 in known fashion.

For low regime operation, shaft 33 is additionally powered from the variator output disc 17 via a drive chain 41 and a high regime clutch 43.

Reference numeral 45 indicates the output end of shaft 33, e.g. for connection with the host vehicle's differential and road wheels.

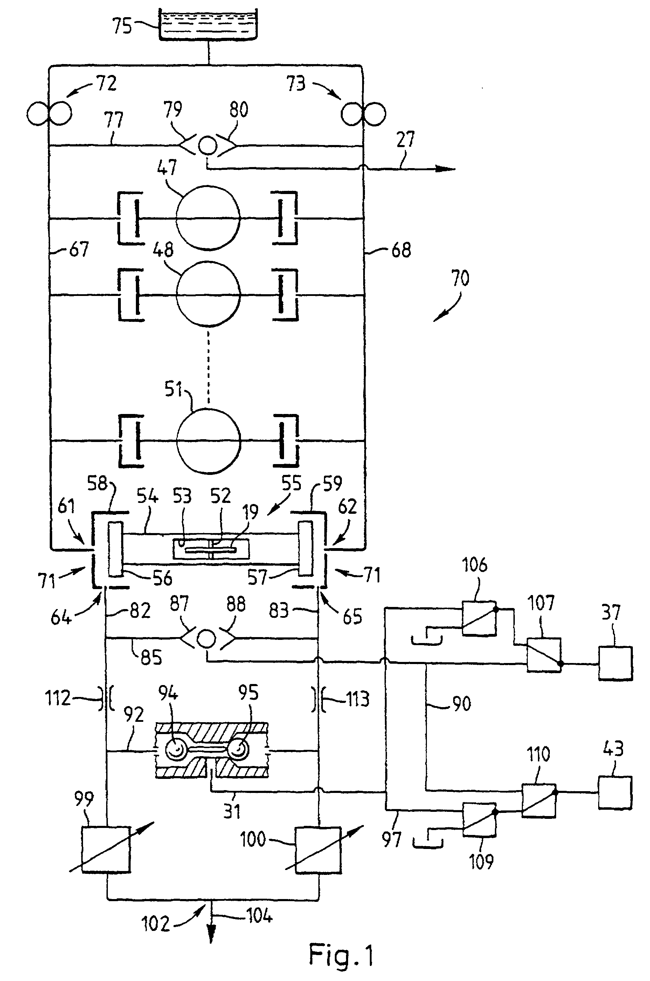

The master roller 19 and the five "slave" rollers 47-51 and their associated control pistons and cylinders appear again in Figure 1 as do the two regime clutches 37 and 43, both of which are fitted with push-off springs rated to withstand a plate-closing pressure of up to 3 bar.

As will be seen from Figure 1, the axle 52 of the master roller 19 is mounted in the cavity 53 of the hollow shaft 54 of a double-acting piston 55. This piston is formed with opposed piston heads 56, 57 which are both free to slide under hydraulic load within coaxial cylindrical caps 58, 59 and to rotate about the longitudinal axis of the shaft 54. Together, piston 55 and end caps 58, 59 act to define a hydraulic ram 71 associated with each roller. It will be appreciated that this figure is purely schematic.

In a modification, item 55 is replaced by a single-headed design of double-acting piston e.g. as disclosed, for example, in GB 2227287 and depicted, for convenience only, in the diagrammatic representation of Figure 2.

Returning to the double-ended arrangement of Figure 1, the hydraulic fluid inlets 61, 62 and outlets 64, 65 for the master piston are formed in the end and side walls of the associated cylinder caps 58, 59 and pressure lines 67, 68 ensure that the various slave pistons behave in exactly the same way as master piston 29 so that all six variator rollers are continuously maintained at the same pressure as one another.

Turning now to the hydraulic control system 70, this comprises two independent oil pumps 72, 73 delivering hydraulic fluid from a sump 75 to the lines 67, 68 referred to above. A cross-connection 77 between these two lines communicates by way of a 'higher-pressure-wins' arrangement of non-return valves 79 and 80 with the flow line 27 in Figure 2.

The outlets 64, 65 for the master piston end caps 58, 59 feed left-hand and right-hand pressure lines 82, 83. These are interconnected by a cross-connection 85 which communicates by way of a 'higher-pressure-wins' arrangement 87, 88 with a fully engaged circuit 90 for clutches 37, 43. A second cross-connection 92 communicates by a 'lower-pressure-wins' arrangement 94, 95 with the an actively engaged circuit 97 for the two clutches.
Reference numerals 99, 100 indicate two electro-hydraulic pressure control valves which, in combination, effectively constitute first and second control means for controlling the clutch apply pressure and the variator rollers in a manner discussed in detail later herein.

Downstream of these two valves, the pressure lines 82, 83 combine at 102 from whence a connection 104 provides low-pressure fluid for general lubrication of the transmission.

Turning now to clutch control circuits 90, 97 it will be noted that each contains two electrically-operated solenoid valves 106, 107 and 109, 110 which can be switched to connect each of the clutches 37, 43 for "active-fill" or for "a fully engaged-fill" as required. From the situation illustrated in Figure 1, for example, switching the valve 106 will connect the low regime clutch 37 to the actively engaged circuit 97 whereas switching the valve 107 instead, will connect the low regime clutch 37 to the fully engaged circuit 90. Valves 109 and 110 operate in analogous fashion to valves 106 and 107 but in respect of the high regime clutch 43.

The system is completed by two 1 bar restrictor plates 112, 113 located in lines 82, 83 between the two cross-connection 85, 92.

In operation of the illustrated embodiment, suppose, by way of example only, that initially clutch 37 is operable and clutch 43 is to be brought into operation in place of clutch 37 to effect a regime change. Then, as compared with the situation illustrated in Figure 1 (neither clutch operative), solenoid valve 107 will have been switched so as to connect clutch 37 with the fully engaged circuit 90.

Turning now to the pressure control valves 99, 100, in a typical case the pressure control valve 99 initially is receiving zero current and the valve 100 is receiving a ½ amp current. This means that the line pressure immediately upstream of valve 99 will be at roughly back-pressure (2 bar) and the next step is to switch valve 109 to fill the line between the valve 109 and clutch 43 with low pressure oil.

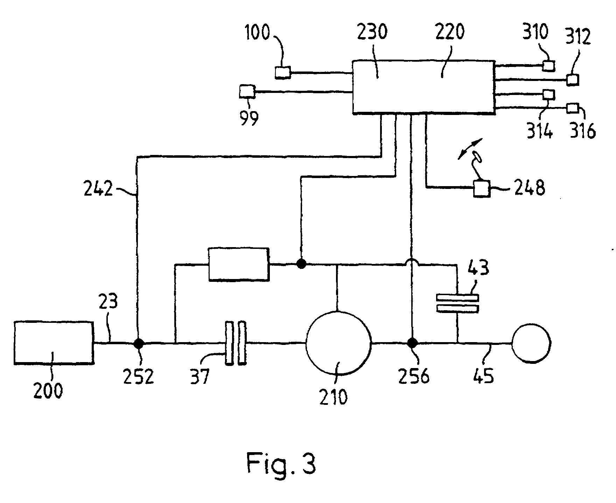

To fill clutch 43 and close the clutch plates in readiness for active control of a regime change, the currents in valves 99, 100 are raised to 0.1 amps and 0.6 amps respectively to increase the adjacent line pressures typically from 2 bar to 3.6 bar (line 82) and from 10 bar to 11.6 bar (line 83). The pressure in line 82 is now sufficient to fill the high-regime clutch 43 at a rate determined by the control current for valves 99, 100. After a set time, typically ½ second, say, the control electronics, shown schematically at 220 in fig 3, will assume that this phase has been completed and the system is held in readiness for the next phase. This latter phase is commenced when the control electronics increase the control valve currents at 99, 100 to 1 amp and 1.5 amps respectively, raising the adjacent line pressures to 18 bar (line 82) and 26 bar (line 83). The pressure in line 82 is now sufficient to cause the high-regime clutch to generate capacity and this moves the transmission to the synchronous ratio. The initial part of the regime-change process is completed when the control electronics measures the transmission ratio to be synchronous.

It is to be noted that in all the situations discussed above, the operating currents for the two pressure control valves are increased by exactly the same amounts so that the difference in pressure between the two lines 82, 83 remains at 8 bar. This means that the roller control piston settings in the variator are unaffected by what is happening at the regime clutches.

As already described in an earlier portion of this application, bringing both the regime-shift clutches into full operation ensures that the transmission is operating at synchronous ratio and it is at this point that the control electronics has to 'decide' from the information it is receiving about the transmission, the engine speed and the throttle pedal setting whether to return the transmission to low regime operation or to switch over to high regime operation. A decision to return to low regime operation will simply involve reversing each of the steps discussed above (at all times maintaining the 8 bar pressure difference between lines 82, 83). It should be noted, however, that if the decision is to change the transmission from one regime to the other, then, when this change of regime occurs, the operating characteristics of the variator will be reversed so that what was the control pressure side of the roller control piston will now be the trailing pressure side and vice versa. This change requires that at the cross-over point of the variator's operational cycle, the "control" and "trailing" pressures lie temporarily at one and the same value.

Thus, if it is confirmed that a change of regime is still appropriate, by maintaining clutch 43 engaged and disengaging clutch 37, the first necessary step is that the valve currents are both raised to a same value, typically 2 amps, so as temporarily to 'cut out' the variator 10 from the transmission before switching valves 106, 107 to the positions illustrated in Figure 1 to disengage clutch 37. Prior to the subsequent release of clutch 37, the current in valve 100 is reduced to zero amps ( 2 bar) while that in valve 99 is reduced to ½ amp (10 bar) so as to preset the pressure differential across the variator to that required for operation in the next regime. Further regime changes at either-clutch will be carried out in an analogous fashion to those described above.

It is to be noted that when the valves 99, 100 have zero control current and the pressure differential across the variator is zero, the presence of restrictor plates 112, 113 (or their functional equivalent) is important as they act to ensure a one bar pressure difference between the two fill lines 90, 97. This means that what is at the time the fully engaged clutch can be retained at a sufficiently high pressure to maintain the clutch engaged while what is at the time the actively engaged clutch can be maintained at a pressure sufficient to prevent the clutch plates from closing against the opposing action of the clutch push-off spring. It is further to be noted that in the event of an emergency overload situation, the pressure peaks occurring as a result of the hydraulic end-stop effect in the relevant cylinder cap 58, 59 will be passed on by lines 67, 68 to the other control cylinders and to the variator end load chamber 25. However, as this momentary peaking will not occur in the downstream lines 82, 83 controlling the regime clutches, these latter will remain unaffected and can slip, if necessary, to relieve the excess load on the variator.

Figure 3 is a schematic representation of the present invention when combined with a conventional powertrain layout. From this and the introductory portion of the specification, it will be appreciated that power can be transmitted from the prime mover (engine) 200 to the output shaft 45 via the epicyclic 210 and the variator 10 of the variator on its own. In low regime clutch 37 is engaged whilst in high regime clutch 43 is engaged. Whilst actual operation of these clutches has been discussed above, optimum control thereof is best achieved by employing some form of control in the form of, for example, electronic control means 220. Such a control 220 comprises means 230 for monitoring any one or more of a number of properties associated with variator operation thereby to determine in advance of the variator reaching synchronous ratio that a change in ratio is necessary and for signalling the electronic control means 220 accordingly. Suitable monitors or measuring devices are well known in the art and are, therefore, not described herein. Parameters such as engine speed; variator ratio; time; transmission ratio; clutch fill time; shift rate; throttle pedal position; hydraulic pressure or rate of change of one or other thereof are all suitable candidates for monitoring.

In the examples of figure 3, lines 242, 244 and 246 each represent links between suitable monitors 252, 254 and 256 positioned for monitoring the engine speed, variator output speed and epicyclic output speed and for supplying information relating thereto to control 220. Additionally, figure 3 shows a pedal position monitor of 248 and similarly connected to control 220.

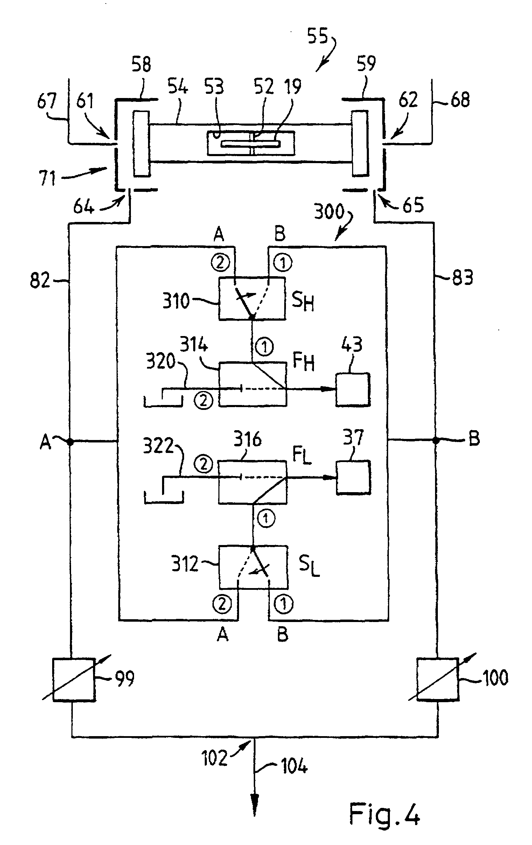

Turning now to figure 4 which illustrates a slightly simplified version of the control shown in figure 2, it will be appreciated that various arrangements are possible. In this simplified version, lines 82, 83 are connected to the clutch control circuit 300 at points A and B respectively. Control valves 99, 100 are connected to lines 82, 83 in the same manner as described with reference to figure 1. The valves continue to supply fluid to the lubrication circuit 104 and vary the pressures in the roller control rams 71. The control system 300 comprise four solenoid actuated valves 310, 312, 314 and 316. The first two valves are operable to take hydraulic fluid from one or other of A or B and pass that fluid onto associated secondary valves 314, 316 respectively. These secondary valves are operable in similar manner to direct hydraulic fluid to a respective clutch 37, 43. This arrangement of valves is functionally very similar to that shown in figure 1. As mentioned with reference to figure 1, the control electronics are also operably connected to valves 99, 100 for varying the position thereof and hence varying Pₐ and P_{b}. Consequently, the control electronics can easily determine which is the greater of the two pressures within the circuit and cause the system to be operated accordingly. For example, whilst operating in drive forwards, the high pressure line is determined by the regime i.e. Low Regime could require the left line, High Regime the right. In over run and reverse drive the pressures reverse. Since the controller causes changes in the pressures within lines 82, 83 it can also change the clutch valve to connect the clutch to the correct line.

Operation of the figure 4 arrangement from the low regime to the high regime follows the following sequence of events:
Firstly, assuming the low range clutch 37 is presently engaged, and the pressure at B is greater than the pressure at A, valve 312 is in position 1 (line B) as is valve 316, thereby to supply high pressure fluid to maintain operation of low range clutch 37. When clutch 37 is engaged, valve 314 is in position 2 thus preventing the supply of any hydraulic fluid to the clutch and allowing any fluid in there from previous operation to drain via outlet 320 to sump 104.

In order to move from low range to high range it is necessary to initiate operation of valves 310 and 314 such as to direct low pressure fluid from A to the clutch. This is simply achieved by switching valve 310 to position 2 and valve 314 to position 1. During this phase of operation the pressure at B (P_{B}) is greater than that at A (P_{A}) and, hence, the high clutch is said to be in the initial stage of active control phase. During this part of the phase, the low pressure fluid acts to close the clutch but provides insufficient pressure to give the clutch capacity i.e. clamp the clutch plates and allow transmission of torque. Completion of this part of the phase can be determined by monitoring the time elapsed since commencement or monitoring other parameters in the system such as clutch position. At this point in time, the ratio of the variator R_{VAR} is not matched to that necessary for synchronism R_{SYNCH} and P_{A} is clearly less than that required to fully engage the clutch (P_{CLAMP}) and allow for the transmission of torque.

In order to move the arrangement to synchronism it is necessary to increase P_{A} in order to allow the clutch to transmit torque. This step is achieved by operating valves 99, 100 in the manner described in relation to figure 1 such that P_{A} is increased without altering the value of P_{B} - P_{A}. In effect, valves 99, 100 are operated together to raise the pressures in both lines 82, 83 by equal amounts until P_{A} is sufficient to cause a drag torque capable of moving the variator to synchronous ratio. At this point the clutch loads the transmission and a certain degree of clutch slip might occur. The final step in this phase involves controlling Pₐ and P_{b} -Pₐ such that the system moves to synchronism and the engaging clutch stops slipping. This is simply achieved by altering the current supplied to valves 99, 100 in the manner described above such that the engaging clutch causes a variation in engine speed such that it matches that required for synchronous operation. In effect, the engine load created by the transmission varies inducing the shift. Once the clutch has stopped slipping, the transmission is at synchronous ratio. If the engine is still producing torque, as is probable, the clutches must be maintained with enough pressure applied for their combined capacity to match the engine drive torque. Increasing both lines 82, 83 to equal pressures will cause the transmission to maintain synchronous ratio against the engine drive whilst unloading the variator (differential pressure = o). Whilst in this condition the transmission ratio and therefore roller angles are constant, i.e. synchronised. Dropping the pressure in the low pressure line of the next regime then sets the variator up with the correct differential pressure and reduces the unwanted clutch capacity appropriately. Eventually, this clutch slips and then releases leaving the transmission in the next regime. If desirable, one might initiate complete final release of the outgoing clutch before the oncoming clutch is fully engaged. Release of clutch 37 is achieved by switching valve 316 to position 2 such that the hydraulic fluid drains via line 322.

From the above it will be appreciated that the controller 220 decides upon an appropriate variator reaction torque therefore differential pressure (P_{b}-Pₐ). If the transmission is approaching synchronous ratio as a result of P_{b}-Pₐ and the controller decides to initiate an induced shift, the next clutch will be connected to the low pressure line and its capacity controlled accordingly. Taking P_{b} as the low pressure line and assuming a differential pressure (P_{b}-Pₐ) of 10 bar is required then initially P_{b}=0 and Pₐ=10 bar. If the controller decides that the drivers demand is best suited to a clutch capacity equivalent to a clutch apply pressure of 3 bar then Pₐ and P_{b} will be progressively increased to P_{b} = 3 bar and Pₐ=13 bar. Now the variator torques are unchanged but the clutch is urging the transmission to synchronism. There has, however, been an increase in the "urging force" due to the clutch. It is possible that the controller, at least in some situations, may require no net change in this movement to synchronism. Since, the total transmission effect could be regarded as the sum of the variator and clutch action, reducing the variator effect could be made to compensate for the extra clutch action. Simplistically, the variator differential could be reduced by 3 bar giving P_{b}= 3 bar and Pₐ=10 bar (assuming the effect of 3 bar at the clutch is exactly compensated by 3 bar less differential pressure at the variator).

It will be appreciated from the above that valves 99, 100 constitute the first control means when operated together to simply raise or lower the pressure of the hydraulic fluid for end load purposes without altering the differential pressure used for roller control. These valves constitute the second control means when operated to vary the differential pressure experienced by the roller control pistons 55.

## Claims

1. A multi-regime continuously-variable-transmission comprising a variator, driven by a prime mover and providing an output drive, including:
a control circuit (70) having first and second hydraulic supply lines (67, 68) for controlling the variator:
first and second hydraulic pumps (72, 73), for supplying hydraulic fluid to said first and second supply lines (67, 68):
first and second hydraulic regime change clutches (37, 43); and
control means (99, 100) for controlling the pressures in said first and second hydraulic supply lines (67, 68); **characterised in that** said control means (99, 100) has a first mode of operation in which it acts to raise or lower the pressures in each supply line (67, 68) equally, thereby to facilitate clutch operation without affecting the control of the variator and a second mode of operation in which it acts to alter the differential pressure in said supply lines (67, 68), thereby to alter the control of the variator, without affecting the clutch engagement.

2. A transmission as claimed in claim 1 in which each clutch (37, 43) includes an actively engaged phase obtained by connecting the clutch to a trailing pressure within the circuit (70) and a fully engaged phase obtained by connecting the clutch to a leading pressure within the circuit (70).

3. A transmission as claimed in claim 2 in which each clutch (37, 43) is operably connected to and, at least initially, controlled by the lower of the two pressures employed to control the variator.

4. A transmission as claimed in claim 3 in which each clutch (37, 43) is operably connected to the higher of the two pressures employed to control the variator subsequent to it having been connected to the lower pressure employed therein.

5. A transmission as claimed in any one of claims 2 to 4 further including supply means (106, 107, 109, 110) for causing the supply of hydraulic fluid to each clutch (37, 43) to vary between the two pressures within the control circuit.

6. A transmission as claimed in any one of claims 2 to 5 further including sequencing means (220) for causing operation and completion of the actively controlled phase prior to commencement of the fully engaged phase.

7. A transmission as claimed in any one of claims 2 to 6 further including electronic control means (220) for initiating clutch operation in advance of a range change.

8. A transmission as claimed in any one of claims 2 to 7 further including monitoring means (230) for monitoring at least one property associated with variator operation thereby to determine in advance of the variator reaching synchronous ratio that a change in ratio is necessary and for signalling the electronic control means accordingly.

9. A transmission as claimed in claim 8 in which said monitoring means (230) includes one or more monitors for monitoring one or more of: engine speed; variator ratio; time; transmission ratio; clutch fill time and shift rate or rate of change of one or other thereof.

10. A transmission as claimed in any of the preceding claims, wherein the variator is of the toroidal-race rolling-traction type having ratio-varying rollers (51) and the first and second hydraulic supply lines (67, 68) control the position of the variator rollers (51).

11. A transmission as claimed in claim 10, wherein each ratio-varying roller is associated with a respective hydraulic ram which is actuated by the pressures in the first and second supply lines (67, 68).

12. A method of operating a control system for a multi-regime continually-variable transmission according to any one of the preceding claims, the method comprising the steps of:
firstly, during regime change, initiating engagement of the otherwise unengaged clutch before the variator reaches synchronous ratio such that the engine load created by the transmission varies and thereby induces a change of regime;
secondly, completing regime change by disengaging the clutch associated with the regime from which the transmission has been changed and completing engagement of the clutch under engagement.

13. A method as claimed in claim 12 and wherein the clutches comprise hydraulically operated clutches and each clutch comprises an actively engaged phase and a fully engaged phase and in which during the active phase the clutch is operably connected to the trailing pressure in a control circuit and during the fully engaged phase the clutch is operably connected to a leading pressure in the control circuit, the method including the step of initiating clutch engagement by firstly connecting the clutch to the trailing pressure and completing engagement by connecting it to the leading pressure in the control circuit.

14. A method as claimed in claim 12 or claim 13 and in which the variator includes ratio varying rollers each associated with a respective hydraulic ram the method including the further step of supplying hydraulic fluid to the hydraulic ram such that the rollers respond to the differential pressure within the control circuit.

15. A method as claimed in any one of claims 12 to 14 including the further step of monitoring one or more parameters associated with the control system, transmission, or items associated therewith, thereby to determine when to commence said first and second steps.

## Patentansprüche

1. Stufenloses Mehrbereichsgetriebe, das einen Variator umfasst, von einer Antriebsmaschine angetrieben wird, einen Abtrieb bereitstellt und Folgendes umfasst:
einen Steuerkreis (70) mit einer ersten und einer zweiten Hydraulikversorgungsleitung (67, 68) zur Steuerung des Variators;
eine erste und eine zweite Hydraulikpumpe (72, 73) zur Zufuhr von Hydraulikfluid zu der ersten und zweiten Versorgungsleitung (67, 68);
eine erste und eine zweite hydraulische Bereichswechselkupplung (37, 43); und
ein Steuermittel (99, 100) zur Steuerung des Drucks in der ersten und zweiten Hydraulikversorgungsleitung (67, 68); **dadurch gekennzeichnet, dass** das Steuermittel (99, 100) einen ersten Betriebsmodus aufweist, in dem es den Druck in jeder Versorgungsleitung (67, 68) gleichermaßen hebt oder senkt, wodurch ein Kupplungsbetrieb ermöglicht wird, ohne die Steuerung des Variators zu beeinträchtigen, und einen zweiten Betriebsmodus, in dem es den Differentialdruck in den Versorgungsleitungen (67, 68) verändert, wodurch die Steuerung des Variators verändert wird, ohne den Kupplungseingriff zu beeinträchtigen.

2. Getriebe nach Anspruch 1, bei dem jede Kupplung (37, 43) eine Aktiveingriffsphase, die durch Verbindung der Kupplung mit einem Sekundärdruck in dem Steuerkreis (70) erhalten wird, und eine Volleingriffsphase, die durch Verbindung der Kupplung mit einem Primärdruck in dem Steuerkreis (70) erhalten wird, umfasst.

3. Getriebe nach Anspruch 2, wobei jede Kupplung (37, 43) betriebsfähig mit dem niedrigeren der beiden Drücke, die zur Steuerung des Variators verwendet werden, verbunden ist und zumindest anfänglich von diesem gesteuert wird.

4. Getriebe nach Anspruch 3, wobei jede Kupplung (37, 43) betriebsfähig mit dem höheren der beiden Drücke, die zur Steuerung des Variators verwendet werden, verbunden ist, nachdem sie mit dem niedrigeren Druck verbunden war, der darin verwendet wird.

5. Getriebe nach einem der Ansprüche 2 bis 4, das des Weiteren Versorgungsmittel (106, 107, 109, 110) umfasst, um die Zufuhr von Hydraulikfluid zu jeder Kupplung (37, 43) zu veranlassen, um zwischen den beiden Drücken in dem Steuerkreis zu variieren.

6. Getriebe nach einem der Ansprüche 2 bis 5, das des Weiteren Folgesteuerungsmittel (220) umfasst, um den Betrieb und den Abschluss der Aktivsteuerungsphase vor dem Beginn der Volleingriffsphase zu veranlassen.

7. Getriebe nach einem der Ansprüche 2 bis 6, das des Weiteren elektronische Steuermittel (220) umfasst, um den Kupplungsbetrieb vor einer Bereichsänderung zu initiieren.

8. Getriebe nach einem der Ansprüche 2 bis 7, das des Weiteren Überwachungsmittel (230) zur Überwachung mindestens einer Eigenschaft umfasst, die mit dem Variatorbetrieb in Zusammenhang steht, um dadurch, bevor der Variator ein Synchronverhältnis erreicht, zu bestimmen, dass eine Verhältnisänderung notwendig ist, sowie zur entsprechenden Signalisierung des elektronischen Steuermittels.

9. Getriebe nach Anspruch 8, wobei das genannte Überwachungsmittel (230) eine oder mehrere Überwachungsvorrichtungen zur Überwachung eines oder mehrerer Werte aus der folgenden Gruppe umfasst: Motordrehzahl; Variatorverhältnis; Zeit; Übersetzungsverhältnis; Kupplungsfüllzeit und Schaltgeschwindigkeit oder Änderungsgeschwindigkeit irgendeines dieser Werte.

10. Getriebe nach einem der vorhergehenden Ansprüche, wobei der Variator von der Art des Toroidspurrollantriebs mit verhältnisvariierenden Rollen (51) ist und die erste und zweite Hydraulikversorgungsleitung (67, 68) die Position der Variatorrollen (51) steuern.

11. Getriebe nach Anspruch 10, wobei jede verhältnisvariierende Rolle mit einem entsprechenden Hydraulikstößel verbunden ist, der durch die Drücke in der ersten und zweiten Versorgungsleitung (67, 68) betätigt wird.

12. Verfahren zum Betrieb eines Steuersystems für ein stufenloses Mehrbereichsgetriebe gemäß einem der vorhergehenden Ansprüche, wobei das Verfahren die Schritte umfasst:
erstens, während der Bereichswechsels das Initiieren des Eingriffs der ansonsten nicht in Eingriff stehenden Kupplung, bevor der Variator ein Sychronverhältnis erreicht, so dass die Motorlast, die durch das Getriebe erzeugt wird, variiert und dadurch einen Bereichswechsel veranlasst;
zweitens, das Abschließen des Bereichswechsels durch Auskuppeln der Kupplung, die dem Bereich zugeordnet ist, von dem ausgehend das Getriebe geschaltet wurde, und Abschließen des Eingriffs der in Eingriff stehenden Kupplung.

13. Verfahren nach Anspruch 12, wobei die Kupplungen hydraulisch betriebene Kupplungen umfassen und jede Kupplung eine Aktiveingriffsphase und eine Volleingriffsphase umfasst und die Kupplung während der aktiven Phase betriebsfähig mit dem Sekundärdruck in einem Steuerkreis verbunden ist und die Kupplung während der Volleingriffsphase betriebsfähig mit einem Primärdruck in dem Steuerkreis verbunden ist, wobei das Verfahren den Schritt umfasst, den Kupplungseingriff zu initiieren, indem zuerst die Kupplung mit dem Sekundärdruck verbunden wird und der Eingriff abgeschlossen wird, indem sie mit dem Primärdruck in dem Steuerkreis verbunden wird.

14. Verfahren nach Anspruch 12 oder Anspruch 13, wobei der Variator verhältnisvariierende Rollen umfasst, von denen jede mit einem entsprechenden Hydraulikstößel verbunden ist, und das Verfahren den weiteren Schritt umfasst, Hydraulikfluid zu dem Hydraulikstößel zu befördern, so dass die Rollen auf den Differentialdruck in dem Steuerkreis ansprechen.

15. Verfahren nach einem der Ansprüche 12 bis 14, das den weiteren Schritt umfasst, einen oder mehrere Parameter zu überwachen, die mit dem Steuersystem, dem Getriebe oder den damit verbundenen Elementen in Zusammenhang stehen, und dadurch den Beginn des ersten und zweiten Schritts zu bestimmen.

## Revendications

1. Transmission à réglage continu à régimes multiples comprenant un variateur, entraîné par un moteur et fournissant un entraînement de sortie, comportant :
un circuit de commande (70) ayant des première et deuxième conduites d'alimentation hydrauliques (67, 68) pour commander le variateur :
des première et deuxième pompes hydrauliques (72, 73), pour fournir un fluide hydraulique auxdites première et deuxième conduites d'alimentation (67, 68) :
des premier et deuxième embrayages de changement de régime hydrauliques (37, 43) ; et
un moyen de commande (99, 100) pour commander les pressions dans lesdites première et deuxième conduites d'alimentation hydrauliques (67, 68) ; **caractérisée en ce que** ledit moyen de commande (99, 100) a un premier mode de fonctionnement dans lequel il sert à augmenter ou à réduire les pressions dans chaque conduite d'alimentation (67, 68) de manière égale, pour ainsi faciliter le fonctionnement de l'embrayage sans affecter la commande du variateur et un deuxième mode de fonctionnement dans lequel il sert à modifier la pression différentielle dans lesdites lignes d'alimentation (67, 68), pour ainsi modifier la commande du variateur, sans affecter l'engagement de l'embrayage.

2. Transmission selon la revendication 1, dans laquelle chaque embrayage (37, 43) comporte une phase d'engagement actif obtenue en connectant l'embrayage à une pression de queue dans le circuit (70) et une phase d'engagement total obtenue en connectant l'embrayage à une pression de tête dans le circuit (70).

3. Transmission selon la revendication 2, dans lequel chaque embrayage (37, 43) est connecté opérationnellement à et, au moins initialement, commandé par la plus basse des deux pressions employées pour commander le variateur.

4. Transmission selon la revendication 3, dans lequel chaque embrayage (37, 43) est connecté opérationnellement à la plus haute des deux pressions employées pour commander le variateur après que celui-ci a été connecté à la pression inférieure employée dans celui-ci.

5. Transmission selon l'une quelconque des revendications 2 à 4, comportant en outre un moyen d'alimentation (106, 107, 109, 110) pour forcer la fourniture de fluide hydraulique à chaque embrayage (37, 43) à varier entre les deux pressions dans le circuit de commande.

6. Transmission selon l'une quelconque des revendications 2 à 5, comportant en outre un moyen de séquencement (220) pour forcer l'opération et l'achèvement de la phase de commande active avant le commencement de la phase d'engagement total.

7. Transmission selon l'une quelconque des revendications 2 à 6, comportant en outre un moyen de commande électronique (220) pour lancer une opération d'embrayage en avance d'un changement de régime.

8. Transmission selon l'une quelconque des revendications 2 à 7, comportant en outre un moyen de contrôle (230) pour contrôler au moins une propriété associée au fonctionnement du variateur pour ainsi déterminer avant que le variateur n'atteigne un rapport synchrone qu'un changement de rapport est nécessaire et pour informer le moyen de commande électronique en conséquence.

9. Transmission selon la revendication 8, dans laquelle ledit moyen de contrôle (230) comporte un ou plusieurs circuits de contrôle pour contrôler l'un ou plusieurs des éléments suivants : vitesse de moteur ; rapport de variateur ; temps ; rapport de transmission ; temps de remplissage d'embrayage et fréquence de changement de vitesse ou fréquence de changement de l'un ou de l'autre de ceux-ci.

10. Transmission selon l'une quelconque des revendications précédentes, dans laquelle le variateur est du type à roulement-traction à chemin de roulement toroïdal ayant des rouleaux de variation de rapport (51) et les première et deuxième conduites d'alimentation hydrauliques (67, 68) commandent la position des rouleaux de variateur (51).

11. Transmission selon la revendication 10, dans laquelle chaque rouleau de variation de rapport est associé à un bélier hydraulique respectif qui est actionné par les pressions dans les première et deuxième conduites d'alimentation (67, 68).

12. Procédé d'exploitation d'un système de commande d'une transmission à réglage continu à régimes multiples selon l'une quelconque des revendications précédentes, le procédé comprenant les étapes de :
premièrement, durant un changement de régime, déclenchement d'un engagement de l'embrayage autrement non engagé avant que le variateur n'atteigne un rapport synchrone de telle sorte que la charge de moteur créée par la transmission varie et induise ainsi un changement de régime ;
deuxièmement, achèvement du changement de régime en désengageant l'embrayage associé au régime à partir duquel la transmission a été changée et achèvement de l'engagement de l'embrayage en cours d'engagement.

13. Procédé selon la revendication 12, et dans lequel les embrayages comprennent des embrayages actionnés hydrauliquement et chaque embrayage comprend une phase d'engagement actif et une phase d'engagement total et dans lequel durant la phase active l'embrayage est connecté opérationnellement à la pression de queue dans un circuit de commande et durant la phase d'engagement total l'embrayage est connecté opérationnellement à une pression de tête dans le circuit de commande, le procédé comportant l'étape de déclenchement de l'engagement d'embrayage en connectant d'abord l'embrayage à la pression de queue et d'achèvement de l'engagement en le connectant à la pression de tête dans le circuit de commande.

14. Procédé selon la revendication 12 ou la revendication 13, et dans lequel le variateur comporte des rouleaux de variation de rapport associés chacun à un bélier hydraulique respectif, le procédé comportant l'étape supplémentaire de fourniture d'un fluide hydraulique au bélier hydraulique de telle sorte que les rouleaux répondent à la pression différentielle dans le circuit de commandé.

15. Procédé selon l'une quelconque des revendications 12 à 14, comportant l'étape supplémentaire de contrôle d'un ou de plusieurs paramètres associés au système de commande, à la transmission, ou à des éléments associés à ceux-ci, pour ainsi déterminer le moment où il convient de commencer lesdites première et deuxième étapes.
